Europäisches Patentamt

European Patent Office

Office européen des brevets

(19)

(11) Numéro de publication : **0 297 955 B1**

(12)                    FASCICULE DE BREVET EUROPEEN

(45) Date de publication du fascicule du brevet :
06.11.91 Bulletin 91/45

(51) Int. Cl.⁵ : **F23D 14/22, F23D 14/78,**
**F23D 14/46, C01B 3/36**

(21) Numéro de dépôt : **88401582.7**

(22) Date de dépôt : **23.06.88**

(54) Brûleur pour oxydation partielle permettant la production de gaz de synthese.

(30) Priorité : 30.06.87 FR 8709268

(43) Date de publication de la demande :
04.01.89 Bulletin 89/01

(45) Mention de la délivrance du brevet :
06.11.91 Bulletin 91/45

(84) Etats contractants désignés :
**BE DE FR GB IT**

(56) Documents cités :
**DD-B- 146 765**
**FR-E- 33 847**
**GB-A- 332 063**
**GB-A- 2 139 343**

(73) Titulaire : **INSTITUT FRANCAIS DU PETROLE**
**4, Avenue de Bois-Préau**
**F-92502 Rueil-Malmaison (FR)**

(72) Inventeur : **Dang, Vu Quang**
**48 bis, boulevard du Général Leclerc**
**F-92200 Neuilly S/Seine (FR)**
Inventeur : **Feugier, Alain**
**3, ruelle du Moulle Morainvilliers**
**F-78630 Orgeval (FR)**
Inventeur : **Gateau, Paul**
**26, rue de la Fontaine des Veaux**
**F-78860 Saint Nom La Brétèche (FR)**
Inventeur : **Poussin, Bernard**
**5, rue de la Ferme**
**F-78420 Carrières sur Seine (FR)**

Jouve, 18, rue Saint-Denis, 75001 PARIS

## Description

La présente invention concerne un brûleur pour oxydation partielle destiné principalement à la production de gaz de synthèse.

Le brûleur selon la présente invention est particulièrement bien adapté pour fonctionner dans un foyer ou réacteur sous pression.

Par ailleurs, le brûleur selon l'invention permet une distribution homogène du carburant et/ou du comburant. De plus, le brûleur selon l'invention est modulaire et possède un comportement facilement extrapolable.

Ceci permet de réduire les coûts de mise au point tant en temps qu'en prix, qui sont souvent élevés pour une grosse installation.

L'art antérieur peut être illustré par les brevets US-3.224.679, 3.989.444 et 3.945.942 et par le brevet GB-A-2.139.343.

Le brevet GB-A-2.139.343 décrit un brûleur utilisé pour la fission d'un gaz naturel avec de l'oxygène et de la vapeur d'eau.

L'inconvénient de ce dispositif réside dans le fait que le mélange des différents composants s'effectue dans un volume non délimité en aval de la plaque la plus externe et de fait, ne permet pas d'obtenir une homogénéisation correcte du mélange des composants. De plus, cette disposition augmente le risque que la combustion se fasse à l'intérieur du brûleur.

Le brûleur selon l'invention comporte deux tubes de préférence sensiblement coaxiaux servant de tuyaux d'amenée au comburant et au(x) combustible(s).

Le comburant peut être soit de l'air, soit de l'oxygène, soit encore de l'air enrichi.

Le combustible qui est un mélange à base d'hydrocarbures ou de charbon peut être, soit gazeux, soit liquide, soit encore solide pulvérulent en suspension, dans une phase liquide, ou encore gazeuse, ou bien dans un mélange entre deux ou plusieurs de ces phases.

Les deux tubes sont coiffés à leurs extrémités de sortie, chacun, par une plaque perforée, tel un disque lorsque les tubes sont cylindriques.

Selon l'invention, il existe une distance entre la face externe de la plaque interne et la face interne de la plaque externe qui permet d'obtenir un effet de canalisation desdits fluides.

Sur une même plaque ou disque, les trous seront, de préférence, identiques et régulièrement répartis.

Les trous de perforation pourront être de forme soit cylindrique, soit tronconique, ou être constitués par des convergents-divergents, éventuellement avec une partie cylindrique.

Le rapport entre d, diamètre de plus faible section circulaire du trou de perforation (diamètre soit du cylindre, soit de la petite base du tronc de cône, soit encore du col du convergent-divergent) et e, épaisseur du disque perforé pourra être tel que :

$$0,01 \leq d/e \leq 100$$

de préférence

$$0,1 \leq d/e \leq 10$$

Les deux disques ou plaques pourront avoir le même nombre de trous. Chaque trou de la plaque ou disque intérieur(e) aura un correspondant sur le disque ou plaque extérieur(e).

Par ailleurs, deux trous correspondants pourront être avantageusement placés l'un en face de l'autre et coaxiaux.

Le rapport des diamètres d, soit $d_e$ pour le disque extérieur et $d_i$ pour le disque intérieur pourra être tel que :

$$1 \leq d_e/d_i \leq 10 \qquad \text{avec } d_i \leq 100 \text{ mm}$$
$$\text{de préférence} \leq 80 \text{ mm}$$

Les disques ou plaques pourront être soit en acier, soit en céramique, à base de carbure(s), de nitrure(s) ou d'oxyde(s). Ces composés réfractaires peuvent être constitués soit avec de l'aluminium, du magnésium, du silicium, du titanium ou du zirconium, soit encore d'un mélange de deux ou plusieurs de ces composés. Les composés peuvent être d'origine soit naturelle comme le corindon ou la cordierite, soit synthétique, comme le carbure de silicium par exemple.

Les plaques pourront être obtenues soit par usinage, soit par moulage, soit encore par la technique dite de frittage.

EP 0 297 955 B1

Une variante consiste à prolonger les trous de la plaque intérieure par des tubes de même diamètre intérieur que ceux-là, la longueur I de prolongement des tubes de prolongement pourra être telle que :

$$0,1 \leq l/d_l \leq 200$$

de préférence

$$0,5 \leq l/d_l \leq 50$$

Ces tubes de prolongement pourront comporter les mêmes matériaux que ceux mentionnés ci-dessus pour les plaques.

Par ailleurs, si h est la distance entre l'extrémité du tube et la face externe du disque extérieur, on pourra avoir.

$$0 \leq h/d_e \leq 10$$

D'une manière plus générale, la présente invention concerne un brûleur pour réaliser sous pression l'oxydation partielle d'un premier fluide par un deuxième fluide. Le brûleur selon l'invention comporte deux tubes d'introduction des fluides, l'un étant interne à l'autre. Le brûleur se caractérise notamment en ce que chacun desdits tubes comporte une plaque, chaque plaque comportant plusieurs trous, et en ce que la plaque du tube externe comporte des trous placés vis-à-vis des trous de la plaque interne, en ce que lesdits trous débouchent avant la face externe de la plaque externe de façon à obtenir un effet de canalisation desdits fluides.

Les fluides pourront être des fluides gazeux. L'une au moins des plaques pourra avoir une épaisseur e et comporter des trous dont la plus petite section de passage possède un diamètre hydraulique d, et être tels que le rapport de ce diamètre par cette épaisseur soit compris entre 0,01 et 100 ou de préférence entre 0,1 et 10, bornes comprises, soit :

$$0,01 \leq d/e \leq 100$$

et de préférence

$$0,1 \leq d/e \leq 10$$

De préférence, les deux plaques auront cette caractéristique. La plaque interne pourra comporter des trous dont le diamètre hydraulique est $d_l$, la plaque externe des trous dont le diamètre hydraulique est $d_e$, les trous de la plaque interne étant vis-à-vis desdits trous de la plaque externe et le rapport du diamètre hydraulique des trous de la plaque externe à celui des trous de la plaque interne pourra être compris entre 1 et 10, bornes comprises.

$$1 \leq d_e/d_l \leq 10$$

Les trous de la plaque interne pourront être prolongés par des tubes de même section et le rapport entre la longueur I de prolongement desdits tubes et le diamètre hydraulique interne pourra être compris entre 0,1 et 200 et de préférence entre 0,5 et 50, bornes comprises, soit :

$$0,1 \leq l/d_l \leq 200$$

et de préférence

$$0,5 \leq l/d_l \leq 50$$

Si h est la distance entre l'extrémité d'un tube de prolongement et la face externe de la plaque externe, le rapport de cette distance au diamètre $d_e$ du trou correspondant de la plaque externe pourra être compris entre 0 et 10, bornes comprises, soit :

$$0 \leq h/d_e \leq 10$$

La plaque externe pourra avoir le même nombre de trous que la plaque interne.

3

L'un au moins des tubes pourra être cylindrique, et la plaque correspondante pourra avoir la forme d'un disque.

Au moins l'un des trous de la plaque interne pourra avoir une forme de révolution telle celle d'un cylindre droit, de révolution d'un tronc de cône ou la forme d'un convergent-divergent comportant éventuellement une partie intermédiaire droite.

L'un des trous de la plaque extérieure pourra avoir la forme d'un convergent-divergent, le trou correspondant de la plaque interne pourra se prolonger par un tube et le tube de prolongement pourra pénêtrer dans le trou de la plaque externe et s'arrêter sensiblement au niveau du col de ce convergent-divergent.

L'une au moins des plaques interne ou externe pourra comporter des moyens de réfrigération.

L'une au moins desdites plaques interne ou externe pourra comporter de l'acier, de la céramique à base de carbure(s), de nitrure(s) ou d'oxyde(s), ces composés réfractaires pourront comporter, soit de l'aluminium, du magnésium, du silicium, du titanium ou encore du zirconium, soit encore un mélange de deux ou plusieurs de ces composés.

La présente invention peut être notamment appliquée à l'oxydation partielle de gaz naturel ou à une coupe de pétrole liquide.

La présente invention sera mieux comprise et ses avantages apparaîtront plus clairement à la description qui suit d'exemples particuliers nullement limitatifs illustrés par les figures parmi lesquelles :

— la figure 1 représente dans son ensemble un brûleur selon la présente invention,

— la figure 2 montre une vue en coupe de ce brûleur,

— la figure 3 montre un détail d'une plaque équipant le brûleur,

— la figure 4 illustre un mode particulier de réalisation du brûleur dont une plaque comporte une boite de réfrigération, et

— les figures 5 à 9 illustrent divers modes de réalisation des plaques dont peut être équipé le brûleur selon l'invention.

Le brûleur selon l'invention peut permettre la fabrication de gaz de synthèse par exemple à partir d'une oxydation partielle de gaz naturel par de l'oxygène.

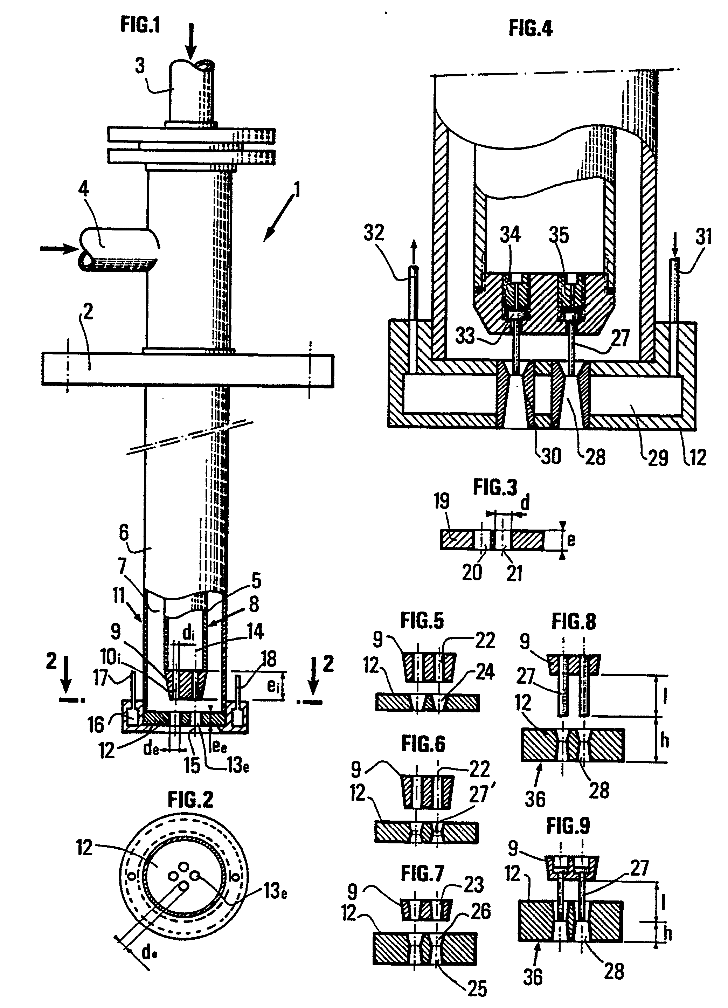

Le brûleur 1 de la figure 1 comporte une bride de fixation 2 permettant de le fixer sur le réacteur ou foyer.

Ce brûleur comporte un premier orifice d'introduction 3 d'un premier gaz et un deuxième orifice d'introduction 4 d'un deuxième gaz. Dans le cas évoqué précédemment, l'oxygène pourra être introduit, soit par le premier orifice 3, soit par le deuxième 4 et le gaz naturel sera introduit par l'orifice restant disponible, respectivement 4 ou 3.

Le premier orifice alimente l'espace défini par la partie interne d'un premier tube ou tube interne 5.

Le tube interne 5 est situé dans un deuxième tube ou tube externe 6. Le deuxième orifice 4 alimente l'espace annulaire 7 délimité par la paroi externe du tube interne 5 et la paroi interne du tube externe 6.

L'extrémité 8 du tube interne comporte une plaque 9 d'épaisseur $e_i$ cette plaque dite interne comporte plusieurs trous 10i de diamètre $d_i$ dont seulement quelques uns sont représentés sur les différentes figures afin de ne pas les surcharger.

L'extrémité 11 du tube externe 6 comporte une plaque 12 dite externe.

La plaque externe 12 d'épaisseur $e_e$ comporte des trous 13e de diamètre $d_e$. Seuls quelques uns de ces trous ont été représentés.

Chaque trou 10i de la plaque interne 9 est placé vis-à-vis d'un trou 13e de la plaque externe 12.

Ainsi, le nombre de trous de la plaque externe 12 est au moins égal au nombre de trous de la plaque interne 9.

De préférence, l'axe 14 d'un trou interne est sensiblement confondu avec l'axe 15 du trou externe correspondant.

Dans l'exemple représenté à la figure 1 où les tubes interne 5 et externe 6 sont sensiblement coaxiaux, la plaque externe 12 est entourée par une chambre à eau 16 servant à la circulation d'un fluide réfrigérant.

La circulation du fluide réfrigérant est assuré par les canalisations 17 et 18.

La figure 3 permet de mieux comprendre les grandeurs géométriques utilisées dans la présente invention. Cette figure représente une plaque 19 qui peut être soit la plaque interne, soit la plaque externe.

Sur cette plaque deux orifices 20 et 21 ont été représentés. d désigne le diamètre de passage de l'un des orifices et e l'épaisseur de la plaque 19.

Selon la présente invention, on aura

$$0,01 \leq d/e \leq 100$$

et de préférence

$$0,1 \leq d/e \leq 10$$

cela que ce soit pour la plaque interne ou pour la plaque externe.

Selon la présente invention, on pourra avoir

$$1 \leq d_o/d_i \leq 10$$

cela notamment pour des orifices dont le diamètre est inférieur à 100 mm et de préférence inférieur à 80 mm.

Les figures 5 à 7 représentent différents modes de réalisation des trous de la première ou de la deuxième plaque.

Sur les figures 5 et 6, les trous 22 de la première plaque 9 sont cylindriques, alors que sur la figure 7, les trous 23 de la plaque interne 9 ont une forme tronconique.

Les trous 24 de la plaque externe 12 ont une forme tronconique sur la figure 5. Sur la figure 7, les trous 25 de la deuxième plaque ont une forme de venturi comportant un convergent suivi d'un divergent en considérant le sens d'écoulement. Au niveau de raccordement du convergent et du divergent, se forme un col 26.

Sur la figure 6, on trouve une partie intermédiaire cylindrique 27' pour réaliser le raccordement du convergent sur le divergent.

Dans le cas de trou comportant un convergent et/ou un divergent, le diamètre à considérer pour les "fourchettes" de valeurs données précédemment, est le diamètre du col correspondant au diamètre le plus petit.

Les figures 4, 8 et 9, représentent le cas où les trous de la plaque interne 9 comportent des tubes de prolongement 27. Sur ces trois figures, les trous 28 de la plaque externe 12 comportent un convergent-divergent 28.

Dans le cas des figures 4 et 9, les tubes de prolongement 27 pénètrent dans les trous 28 de la plaque externe 12.

Sur la figure 4, la plaque 12 défini elle-même la forme d'une chambre à eau 29 et les trous de passage 28 sont définis par des pièces rapportées 30.

Les canalisations 31 et 32 servent à la circulation du fluide réfrigérant dans la chambre à eau 29.

Sur la figure 4, les tubes de prolongement 27 comportent une base 33 qui permet leur maintien par un bouchon vissé 34, ce bouchon comportant un passage 35 de diamètre $d_i$ pour la circulation du fluide à injecter.

Selon une variante de la présente invention, il sera avantageux d'avoir le rapport I sur $d_i$ tel que

$$0,1 \leq l/d_i \leq 200$$

et de préférence

$$0,5 \leq l/d_i \leq 50$$

où I correspond à la hauteur du tube de prolongement.

Selon une autre variante, qui peut être combinée avec les autres modes de réalisations, on aura

$$0 \leq h/d_o < 10$$

où h est la distance entre l'extrémité du tube de prolongation et la face externe de la plaque externe 12.

## Revendications

1. Brûleur pour réaliser sous pression l'oxydation partielle d'un premier fluide par un deuxième fluide, comportant deux tubes d'introduction des gaz, l'un étant interne à l'autre, chacun desdits tubes (5, 6) comporte une plaque (9, 12), chaque plaque comportant plusieurs trous (10i, 13e), la plaque du tube externe (12) comportant des trous (13e) placés vis-à-vis des trous (10i) de la plaque interne, caractérisé en ce qu'il existe une distance entre la face externe de la plaque interne et la face interne de la plaque externe de façon à obtenir un effet de canalisation desdits fluides.

2. Brûleur selon la revendication 1, caractérisé en ce que l'une au moins desdites plaques (9, 12) a une épaisseur e et comporte des trous dont la plus petite section de passage possède un diamètre hydraulique d, caractérisé en ce que le rapport de ce diamètre à cette épaisseur est compris entre 0,01 et 100 et de préférence entre 0,1 et 10, bornes comprises, soit :

$$0,01 \leq d/e \leq 100$$

et de préférence

$$0,1 \leq d/e \leq 10$$

3. Brûleur selon l'une des revendications précédentes, caractérisé en ce que ladite plaque interne comporte des trous dont le diamètre hydraulique est $d_i$, ladite plaque externe comporte des trous dont le diamètre hydraulique est $d_e$, lesdits trous de la plaque interne étant vis-à-vis desdits trous de la plaque externe et en ce que le rapport du diamètre hydraulique des trous de la plaque externe à celui des trous de la plaque interne est compris entre 1 et 10, bornes comprises, soit

$$1 \leq d_e/d_i \leq 10$$

4. Brûleur selon l'une des revendications précédentes, caractérisé en ce que les trous de la plaque interne sont prolongés par des tubes (27) de même section et en ce que le rapport entre la longueur l de prolongement desdits tubes et ledit diamètre hydraulique interne est compris entre 0,1 et 200 et de préférence entre 0,5 et 50, bornes comprises, soit :

$$0,1 \leq l/d_i \leq 200$$

et de préférence

$$0,5 \leq l/d_i \leq 50$$

5. Brûleur selon la revendication 4, caractérisé en ce que h étant la distance entre l'extrémité d'un tube de prolongement et la face externe de la plaque externe, le rapport de cette distance au diamètre $d_e$ du trou correspondant de la plaque externe est compris entre 0 et 10, bornes comprises, soit :

$$0 \leq h/d_e \leq 10$$

6. Brûleur selon l'une des revendications précédentes, caractérisé en ce que la plaque externe a le même nombre de trous que la plaque interne.

7. Brûleur selon l'une des revendications précédentes, caractérisé en ce que l'un au moins desdits tubes est cylindrique, et en ce que la plaque correspondante a la forme d'un disque.

8. Brûleur selon l'une des revendications précédentes, caractérisé en ce qu'au moins l'un desdits trous de la plaque interne ou externe a une forme de révolution telle qu'un cylindre droit (22), un tronc de cône (23) ou la forme d'un convergent-divergent (28) comportant éventuellement une partie intermédiaire droite (27').

9. Brûleur selon la revendication 8, caractérisé en ce que ledit trou de la plaque extérieure a la forme d'un convergent-divergent (28), en ce que le trou correspondant de la plaque interne se prolonge par un tube (27) et en ce que ledit tube de prolongement pénètre dans le trou de la plaque externe et s'arrête sensiblement au niveau du col de ce convergent-divergent.

10. Brûleur selon l'une des revendications précédentes, caractérisé en ce qu'il comporte des moyens de réfrigération (17, 29) de l'une au moins desdites plaques.

11. Brûleur selon l'une des revendications précédentes, caractérisé en ce que l'une au moins desdites plaques comporte de l'acier sur de la céramique à base de carbure(s), de nitrure(s) ou d'oxyde(s), ces composés réfractaires pourront comporter, soit de l'aluminium, du magnésium, du silicium, du titanium ou encore du zirconium, soit encore un mélange de deux ou plusieurs de ces composés.

12. Application du brûleur selon l'une des revendications précédentes à l'oxydation partielle de gaz naturel.

13. Application du brûleur selon l'une des revendications 1 à 11 à l'oxydation partielle d'une coupe de pétrole liquide.

## Patentansprüche

1. Brenner, um unter Druck die partielle Oxidation eines ersten Fluids durch ein zweites Fluid zu realisieren, mit zwei Rohren zum Einführen der Gase, wobei das eine innerhalb des anderen sich befindet und jedes dieser Rohre (5, 6) eine Platte (9, 12) umfaßt, wobei jede Platte mehrere Löcher (10i, 13e) umfaßt und die Platte des Außenrohres (12) Löcher (13i) gegenüber Löchern (10i) der Innenplatte umfaßt, dadurch **gekennzeichnet**, daß ein Abstand zwischen der Außenfläche der Innenplatte und der Innenfläche der Außenplatte derart besteht, daß ein Kanalisierungseffekt dieser Fluide erhalten wird.

2. Brenner nach Anspruch 1, dadurch **gekennzeichnet**, daß wenigstens eine dieser Platten (9, 12) eine Dicke e hat und Löcher umfaßt, deren kleinster Durchgangsquerschnitt einen hydraulischen Durchmesser d besitzt, dadurch **gekennzeichnet**, daß das Verhältnis dieses Durchmessers zu dieser Dicke zwischen 0,01 und 100 und vorzugsweise zwischen 0.1 und 10, Grenzen eingeschlossen, beträgt:

$$0{,}01 \leq d/e \leq 100$$

und vorzugsweise

$$0{,}1 \leq d/e \leq 10$$

3. Brenner nach einem der vorhergehenden Ansprüche, dadurch **gekennzeichnet**, daß diese Innenplatte Löcher umfaßt, deren hydraulischer Durchmesser gleich $d_i$ ist, wobei die Außenplatte Löcher umfaßt, deren hydraulicher Durchmesser $d_e$ ist, wobei diese Löcher der Innenplatte gegenüber diesen Löchern der Außenplatte sind und daß das Verhältnis des hydraulischen Durchmessers der Löcher der Außenplatte zu dem der Löcher der Innenplatte zwischen 1 und 10, Grenzen eingeschlossen, beträgt

$$1 \leq d_e/d_i \leq 10$$

4. Brenner nach einem der vorhergehenden Ansprüche, dadurch **gekennzeichnet**, daß die Löcher der Innenplatte durch Rohre (27) gleichen Querschnitts verlängert sind und daß das Verhältnis zwischen der Länge L der Verlängerung dieser Rohre und diesem hydraulischem Innendurchmesser zwischen 0,1 und 200 und vorzugsweise zwischen 0,5 und 50, Grenzen eingeschlossen, beträgt:

$$0{,}1 \leq L/d_i \leq 200$$

und vorzugsweise

$$0{,}5 \leq L/d_i \leq 50$$

5. Brenner nach Anspruch 4, dadurch **gekennzeichnet**, daß, wenn H die Entfernung zwischen dem Ende eines Verlängerungsrohrs und der Außenfläche der Außenplatte ist, das Verhältnis dieser Entfernung zum Durchmesser $d_e$ des entsprechenden Loches der Außenplatte zwischen 0 und 10, Grenzen eingeschlossen, beträgt:

$$0 \leq h/d_e \leq 10$$

6. Brenner nach einem der vorhergehenden Ansprüche, dadurch **gekennzeichnet**, daß die Außenplatte die gleiche Anzahl von Löchern wie die Innenplatte hat.

7. Brenner nach einem der vorhergehenden Ansprüche, dadurch **gekennzeichnet**, daß wenigstens eines dieser Rohre zylindrisch ist und daß die entsprechende Platte die Form einer Scheibe hat.

8. Brenner nach einem der vorhergehenden Ansprüche, dadurch **gekennzeichnet**, daß wenigstens eines dieser Löcher der Innenplatte oder Außenplatte eine Umdrehungsgestalt beispielsweise die eines geraden Zylinders (22), eines Kegelstumpfes (23) oder die Form eines Konvergent-Divergentgebildes (28), gegebenenfalls mit einem geraden Zwischenteil (27') hat.

9. Brenner nach Anspruch 8, dadurch **gekennzeichnet**, daß dieses Loch der Außenplatte die Gestalt eines Konvergent-Divergentgebildes (28) hat, daß das entsprechende Loch der Innenplatte durch ein Rohr (27) verlängert ist und daß dieses Verlängerungsrohr in dieses Loch der Außenplatte eindringt und im wesentlichen in Höhe der Verengung dieses Konvergent-Divergentgebildes aufhört.

10. Brenner nach einem der vorhergehenden Ansprüche, dadurch **gekennzeichnet**, daß er Kühlmittel (17, 29) für wenigstens eine dieser Platten umfaßt.

11. Brenner nach einem der vorhergehenden Ansprüche, dadurch **gekennzeichnet**, daß wenigstens eine dieser Platten Stahl auf Keramik auf der Basis von Karbid(en), Nitrid(en) oder Oxyd(en) umfaßt, wobei diese feuerfesten Verbindungen entweder Aluminium oder Magnesium, Silicium, Titan oder auch Zirkon oder auch ein Gemisch von zwei oder mehreren dieser Verbindungen umfassen können.

12. Verwendung des Brenners nach einem der vorhergehenden Ansprüche für die partielle Oxydation von Erdgas.

13. Verwendung des Brenners nach einem der Ansprüche 1 bis 11 für die partielle Oxydation eines flüssigen Erdölschnitts.

## Claims

1. A burner for the partial oxidation under pressure of a first fluid by a second fluid, comprising two gas feed tubes, one being inside the other, wherein each of the tubes (5, 6) comprises a plate (9, 12), each plate having several holes (10i, 13e) and the plate of the external tube (12) has holes (13i) located opposite the holes (10i) of the internal plate, characterised in that a gap is formed between the outer surface of the internal plate and the inner surface of the external plate so as to provide flow ducts for the fluids.

2. A burner as claimed in claim 1, characterised in that at least one of the plates (9, 12) has a thickness e and has holes whose smallest throughflow section has a hydraulic diameter d, wherein the ratio of this diameter to this thickness is between 0.01 and 100 and preferably between 0.1 and 10, boundaries included, namely :

$$0.01 \leq de \leq 100$$

and preferably

$$0.1 \leq d/e \leq 10$$

3. A burner as claimed in one of the preceding claims, characterised in that the internal plate has holes with a hydraulic diameter of $d_i$, the external plate having holes with a hydraulic diameter of $d_e$, the holes in the internal plate being opposite the holes in the external plate and wherein the ratio of the hydraulic diameter of the holes in the external plate to that of the holes in the internal plate is between 1 and 10, boundaries included, namely :

$$1 \leq d_e/d_i \leq 10$$

4. A burner as claimed in one of the preceding claims, characterised in that the holes in the internal plate are extended by means of tubes (27) of the same section and in that the ratio between the extension lengths 1 of the tubes and the internal hydraulic diameter is between 0.1 and 200 and preferably between 0.5 and 50, boundaries included, namely :

$$0.1 \leq 1/d_i \leq 200$$

and preferably

$$0.5 \leq 1/d_i \leq 50$$

5. A burner as claimed in claim 4, characterised in that h is the distance between the end of an extension tube and the outer surface of the external plate and the ratio of this distance to the diameter $d_e$ of the corresponding hole in the external plate is between 0 and 10, boundaries included, namely :

$$0 \leq h/d_e \leq 10$$

6. A burner as claimed in one of the preceding claims, characterised in that the external plate has the same number of holes as the internal plate.

7. A burner as claimed in one of the preceding claims, characterised in that at least one of the tubes is cylindrical and in that the corresponding plate is in the form of a disk.

8. A burner as claimed in one of the preceding claims, characterised in that at least one of the holes in the internal or external plates is of circular cross-section shape such as a straight (22) cylinder, a truncated cone (23) or a section of convergent-divergent shape (28) possibly comprising an intermediate straight section ('27).

9. A burner as claimed in claim 8, characterised in that the hole in the outer plate is of convergent-divergent form (28), the corresponding hole in the internal plate is extended by a tube (27) and the extension tube penetrates the hole in the external plate and stops substantially at the level of the neck of this convergent-divergent section.

10. A burner as claimed in one of the preceding claims, comprising a means for cooling (17, 29) at least one of the plates.

11. A burner as claimed in one of the preceding claims, characterised in that at least one of the plates comprises steel on carbide-, nitride- or oxide-based ceramic and these refractory compounds may comprise either aluminium, magnesium, silicon, titanium or zirconium or a mixture of two or more of these compounds.

12. Application of the burner as claimed in one of the preceding claims to the partial oxidation of natural gas.

13. Application of the burner as claimed in one of claims 1 to 11 to partial oxidation of a liquid petroleum fraction.

FIG.1

FIG.4

FIG.3

FIG.2

FIG.5

FIG.8

FIG.6

FIG.7

FIG.9